# EUROPEAN PATENT APPLICATION

(11) **EP 1 674 885 A1**
(43) Date of publication of application: **28.06.2006**
(21) Application number: 04106781.0
(22) Date of filing: 21.12.2004
(51) Int. Cl.: G01S 13/93, G01S 15/93

(54) **Method for detecting objects in the blind zone of the sensor surroundings**

(71) Applicant: ROBERT BOSCH GMBH, 70442 Stuttgart (DE)
(72) Inventor: Ge, Jie, 70499 Stuttgart-Hausen (DE); Danz, Christian, 70469 Stuttgart (DE)

(57) **Abstract**

The present invention relates to a method for detecting and identifying objects in the blind zone of the sensor surroundings, which is a parking assistance system, which functions with the help of a Short Range Radar (SRR) System. The problem which the present invention deals with is the infiltration and intrusion of objects in an area known as a blind zone, which is invisible to the driver, which act as impediments in the way of vehicles, at the time of parking. With the help of the method for detecting and identifying objects in the blind zone of the SRR sensors the intrusions are detected by the SRR System and it also detects the position of the objects with the changing direction of the motion of the vehicle. There are 4 SRR Sensors attached, (one to each corner of the vehicle). These SRR Sensors have a viewing angle of +/- 45 (degrees) in the horizontal plane. There is also an acoustic and optical warning signal, which is triggered, once an object is detected in front of the vehicle in the blind zone. Before the activation of the signal the presence of the objects is stored in the Non-volatile memory of the SRR System.

The object of the invention is to invent a method to detect or identify objects in the blind zone and save them in the non-volatile memory of the system and retain the information until the vehicle parking position has at least exited the blind zone.

The method is particularly suited for vehicles as it guides them to park the vehicle in an obstacle free zone, and enables the drivers to surf the vehicle through the above mentioned blind zone, by converting it into a visible zone.

## Description

### Background Information / Prior art

This present invention in general relates to detection and identification of the objects in the blind zone of the sensor surroundings. More specifically this invention relates to the documentation method to be used for detecting and identifying objects in the blind zone of the sensor surroundings according to the definition in claim 1.

The ultra sound based park pilot has already been marketed by Robert Bosch Ltd., as a parking assistance system. With ongoing progress in the development of Short Range Radar Sensors (SRR), their application in the Parking assistance systems is greatly enhanced. The SRR sensors used in the Parking assistance system, could also be used in other driving assistance systems such as ACC Stop & Go (Adaptive Cruise Control), ACC Low Speed Following, PreCrash.

The SRR have a high detection range and the system can be built into the backstops /bumper unnoticeably.

Due to physical conditions however, the SRR sensors of Bosch have a maximum viewing angle of + / - 45° in the horizontal plane. The present configuration of the SRR Parking assistance system comprises of a maximum of 4 SRR sensors 1 in the Bumper. There exists a blind zone 2 between the detection range 3 and adjacent sensors 1. Also, the objects 4 with a radar cross-section smaller than the zone 2 width cannot be identified in the blind zone 2.

The problem to be solved is the detection of intrusion of objects in the blind zones, using the historical information about registration of such objects and affording timely warning to the driver. Due to the historical position and direction of motion of the objects under consideration and by following the position, which determines the overlapping area of the objects, the motion of filaments of the relevant objects can be determined. It is thus possible to identify whether the objects are intruding in the blind zone.

### Importance and advantages of the invention

At present, the Parking assistance system is applied only in the range of the SRR sensors, which triggers the warning signal of objects. The warning signal is stopped as soon as the relevant objects within the range of the SRR sensors are lost. The SRR Parkpilot in the Parking assistance system will fail when an object intrudes in the blind zone, just 50 cm before the vehicle.

The present invention ensures that the objects 4 are evaluated by the evaluation of the Y-coordinates during the parking manoeuvre with respect to their position and direction of motion. The relevant objects 4 are registered consequently, which may intrude, in the blind zone 2. The warning sustains even after the entry of the objects 4 in the blind zone 2 till the vehicle 5 is brought to standstill.

The present invention is identified with the storage of information about interfering or intruding objects 4 in the blind zone in permanent memory. Consequently, a warning is sent to the driver during the next start-up; in regard to the direction where an object 4 finally stood near the vehicle 5, regardless of whether the object is actually then present there or not. A warning of long duration is generated by the parking assistance system in such a situation when the objects 4 with a wider reflex profile appear near the vehicle 5, which are detected by the SRR Sensors 1. Thereby, the driver will be warned of the objects 4 somewhere near the vehicle 5, in advance of the danger of collision, even if the objects 4 are hidden in the blind zone 2.

Furthermore, within the control range 3, apart from the application of the SRR-Sensors 1 other sensors like Ultrasonic sensors, Video sensors can also be suitably in built. The present invention also has one advantage in that, with it almost all sphere sensors emerge out of the blind range 2, or else the functional description would shrink.

### Brief description of the invention

In the present invention, the objects 4 can come up to the vehicle 5 in three different directions: from left, from right or through the middle. As the SRR sensors 1 have a high detection range, the position of the objects 4 are initially located in the overlapping area 7 and can be detected at an early stage by determination through triangulation of distances within the respective SRR sensors 1. Thus, their direction of motion can be pursued. The motion of objects 4 can be determined through the time difference calculation of the object position.

The objects 4 are traced again on the basis of the previously detected direction of motion, though not on overlapping ranges 7. Here, it is assumed that the direction of motion of the objects 4 (e.g. the vehicle) has not at all changed in this field which would be so in a short parking distance.

As soon as an object 4 intrudes in the blind zone 2, it is saved in the non-volatile memory of the system. The information is retained until the vehicle's 5 parking position has at least exited the blind zone 2. If the motion is detected in the direction where an obstacle 4 is encountered earlier in the blind zone 2, then an acoustic and an optical warning signal is evoked once to remind the driver about the obstacle 4.

The objects 4 are handled with the same procedure as applicable to the SRR sensors 1, but due to the limited physical conditions obtaining in the nearby area (about 30cm in front of the bumper) they cannot be detected or are out of range 3.

### Brief description of the Drawings

Now the present invention is described with reference to drawings accompanying this specification.

### The figures show:

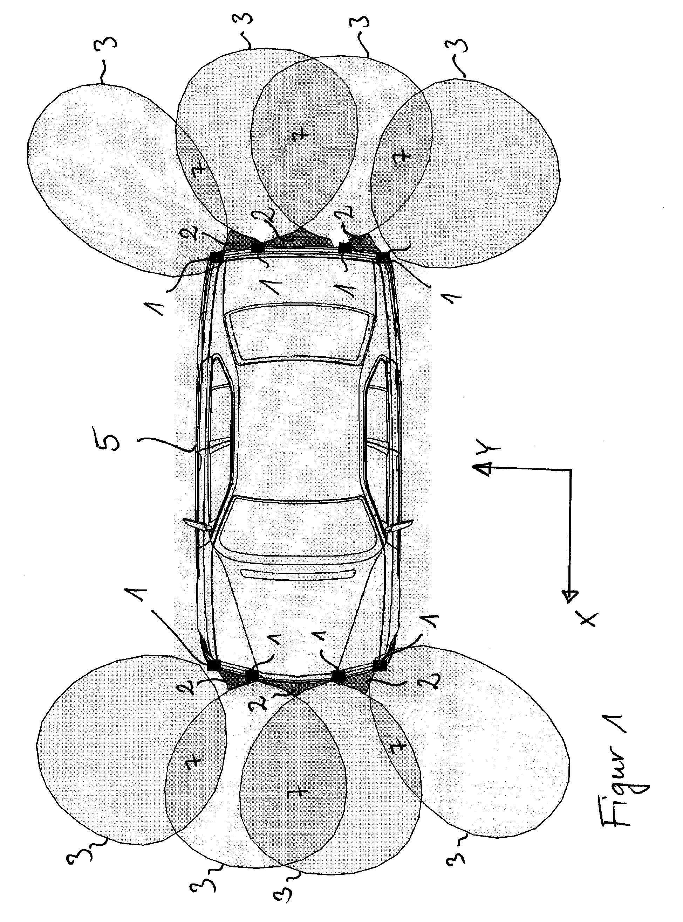

Figure 1 Visible range and blind zone at Parkpilot with 4 SRR's.

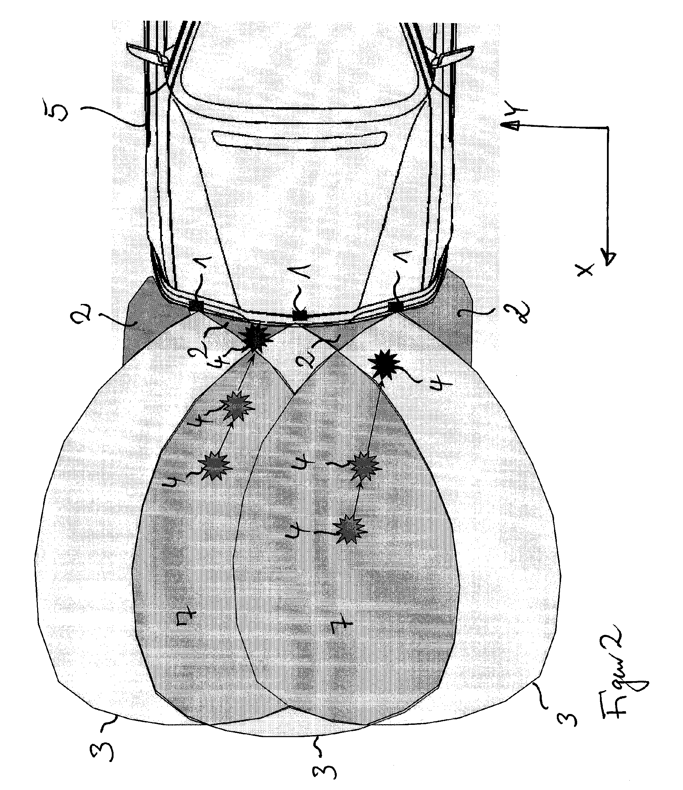

Figure 2 Objects in the visible range and in the blind zone e.g. Parkpilot with 3 SRR's.

The purpose of description of this specification is to explain the salient features of the invention. It is to be noted that the description does not in any way limit the scope and ambit of the invention. It is clear that within the scope and ambit of the invention various modifications or amendments are permissible. The scope of the claim is defmed in the following description.

## Claims

1. A documentation method, for detecting and identifying objects (4) in the blind zone (2) of the sensor surrounding whereby the objects (4) coming upto the vehicle (5) from different directions are evaluated and detected / located under the evaluation of Y-coordinates during the parking manoeuvre with respect to their position in the overlapping area (7) and direction of motion and wherein the blind zone (2) exists between the detection range (3) and adjacent SRR sensors (1) which have high detection range and which can be built into the backstops unnoticeably with a non volatile memory for retention of information with regard to the objects (1) in the blind zone (2).

2. A method for detecting and identifying objects (4) as recited in claim 1 wherein the position of the objects (4) in the overlapping area (7) can be determined through triangulation of distances within the respective SRR Sensors (1) and the motion of objects (4) which can be determined through the time difference.

3. A method for detecting and identifying objects (4) as recited in one of claims 1 to 2 wherein the objects (4) are traced again on the basis of the previously detected direction of motion, though not on overlapping ranges assuming that the direction of motion of the objects (e.g. the vehicle) is not at all changed in this field, which would be so in a short parking distance.

4. A method for detection and identification of objects (4) as recited in one of claims 1 to 3 wherein when the object (4) intrudes the blind zone (2), it is saved in the non-volative memory (Permanent Memory) of the parking assistance system.

5. A method of detection and identification of objects (4) as recited in claim 4 wherein the information is retained until the vehicle parking position has at least exited the blind zone (2).

6. A method for detection and identification of objects as recited in one of claims 2 to 5 wherein if the motion is detected in the direction where an obstacle is encounted earlier in the blind zone (2), then an acoustic and an optical warning signal is evoked to remind the driver about the obstacle which sustains or continues till the vehicle (5) is brought to a standstill position.

7. A method for detection and identification of objects as recited in claim 6 where the objects (4) are handled with the same procedure as applicable to the SRR sensors (1), but using the historical information, objects (4) are detected and identified in the blind zone (2) except the objects (4) in the nearby area (about 30 cm in front of the bumper) which cannot be detected or are out of range. This contrasts well with the SRR sensors (1) where the objects (4) in the blind zone (2) and about 50 cm in front of the vehicle cannot be detected.

8. A method as recited in claim 7 wherein within the control range, apart from the application of the SRR sensors (1), other sensors like ultrasonic sensors, video sensors can also be suitably in built and wherein the SRR sensors (1) used in the parking assistance system could also be used in other driving assistance systems such as ACC Stop and Go (Adaptive Cruise Control), ACC low speed following pre crash.

9. A method as recited in claim 8 wherein almost all sphere sensors emerge out of blind range (2), without which their functional description would shrink.

10. A method as described in the specification and as illustrated by way of drawing.
